# EUROPEAN PATENT APPLICATION

(11) **EP 4 141 592 A1**
(43) Date of publication of application: **01.03.2023**
(21) Application number: 21192932.8
(22) Date of filing: 24.08.2021
(51) Int. Cl.: G05B 19/4061

(54) **CONTROLLING INDUSTRIAL MACHINES BY TRACKING MOVEMENTS OF THEIR OPERATORS**

(71) Applicant: Technische Universität Darmstadt, 64289 Darmstadt (DE)
(72) Inventor: PAL, Suman, 605012 Pondicherry (IN); CHAKRABORTY, Kousheek, 605001 Pondicherry (IN); ADITYA, Dyuman, 605012 Pondicherry (IN); DATTA, Arjun Vir, Acton, MA 01720 (US); PETERS, Jan, 64342 Seeheim-Jugenheim (DE)
(74) Representative: Zahn, Matthias

(57) **Abstract**

A computer system (200) obtains control signals (250) to control the operation of an industrial machine (100) that has an operative unit (120). The computer system (200) monitors movement of a human operator (300). A position monitor (220) determines position data (x, y, z) for a hand (320) of the operator (300) at a first repetition interval. A modality monitor (230) receives a modality attribute (232, CLOSED/OPEN) of the hand at a second repetition interval that is shorter than the first repetition interval. The modality monitor receives the modality attribute from a modality converter that processes modality data indicating for a pair of particular fingers (331, 332) of the hand if these fingers are touching each other or not touching. A processing module (240) receives the position data, receives the modality attribute and provides a control signal (250) to the machine (100). The control signal causes the machine to move or to stop the operative unit depending on the modality attribute.

## Description

### Technical Field

The disclosure generally relates to controlling technical equipment, and more in particular relates to controlling industrial machines by tracking the movement of human operators.

### Background

Technical equipment can run automatically according to pre-defined operation schemes. However, human operators continue to control technical equipment by interacting with control elements in real-time. Such operator-focused control can be required to set up automation, or can be required in situations where automation is impossible.

Some of the control elements would also qualify as human-machine interfaces (HMI) or user interfaces (UI). But independently from the terminology, physically or virtually moving control elements causes the technical equipment to react. In many situations, movement is up-scaled: moving a control element slightly may cause the equipment to move heavily, with consequences for the operational safety of the equipment and for the surrounding environment.

Drivers and pilots control vehicles or aircraft by moving the steering wheel or the like by hand, by pressing pedals by foot and so on. Industrial workers control industrial machines by operating control elements such as knobs, handles, buttons, touch screens, portable control devices (such as 3D mouses) and so on.

Very often, human operators and technical equipment are co-located in the same area or environment. The human operators must be protected from safety hazards. Depending on the environment, such hazards may come from radioactive radiation, extreme high or low ambient temperatures, air pollution with gases or particles (e.g., resulting from spray painting, sand blasting, grinding), equipment movement etc.

For some industrial machines, the human operator can control the machine via monitors that track body movement. This is convenient for equipment that somehow imitates human body parts and/or that has human-like kinematics. Prominent examples for such technical equipment are industrial robots.

Simplified, the monitor tracks the body movement and a controller (usually a computer) translates movement data to control signals. Techniques are known in the art, and comprise, for example, the use of joysticks or other hand-operated devices, movement tracking by an exoskeleton with sensors, the application of haptic feedback clothing (such as special gloves), optical motion capturing systems, and others.

Consequently, the equipment follows body movements of the human operator. For example, the operator moves an arm or moves a hand, and an operative unit being an equivalent part of the machine follows the movement. In case that the industrial machine is an industrial robot, the operative unit can be an end-effector of the robot.

The machine itself may present a safety hazard as well. For example, a robot arm or the operative unit may hit the operator. Therefore, the operator would be located in sufficient distance to the machine (to avoid collision). The operator may watch the machine through a window or - frequently in case of teleoperation from a remote location - through video or the like.

The machine does not have to follow the operator in all body parts. For robots it may be sufficient that the operative unit follows the hand exactly, but the robot arm can follow the operator's arm in approximation.

However, translating body movements to machine movements in real-time has constraints, among them the following: (i) The monitor needs to process data. The monitor translates human movements to machine movements with an inherent delay. (ii) A monitor that tracks body movement does not necessarily present haptic feedback to the operator and does not require the human operator to apply physical forces. There is no direct interaction via knobs, handles or the like that would give the operator some guidance to move. Occasionally, the operator may therefore move in a way that is not influenced by traditional control elements, but the movement is nevertheless tracked. The monitor may translate unexpected body movement to unexpected machine movement, with the potential to cause damage (by collision with obstacles, or otherwise). (iii) The monitor that captures operator movement is "the weakest link in a chain". Any tracking inaccuracy can translate into non-desired movement of the machine. For example, the monitor can be implemented with a camera, but that camera may not work in poor light conditions. (iv) In case of emergency or in case of detecting strange machine behavior, the operator may communicate with the computer in a way that is not understood by the interface. For example, the human operator may shout "STOP!". But the interface likely does not have a microphone that operates in noisy industrial environments, and the interface would not understand the meaning. Or, monitors would not evaluate facial expressions, especially if the operator wears protective clothing.

Teleoperation of industrial machines is also known in the art, and the following references are cited here as an example: [1] Peter F. Hokayem, and Mark W. Spong (2006). "Bilateral teleoperation: An historical survey". Automatica, 42(12), 2035-2057. [2] T.B. Sheridan (1989). "Telerobotics". Automatica, 25(4), 487-507. [3] T.B. Sheridan (1993) "Space teleoperation through time delay: Review and prognosis". IEEE Transactions on Robotics and Automation, 9 (5), pp. 592-606.

3D human pose estimation is known in the art, and the following reference is cited here as an example: [4] Dushyant Mehta, et al: "XNect: Real-time Multi-Person 3D Motion Capture with a Single RGB Camera" ACM Trans. Graph., Vol. 39, No. 4, Article 1, publication in July 2020.

### Summary

A system performs a computer-implemented method to operate an industrial machine. The system operates processing steps in two loops, wherein the loops are substantially independent from each other. The first loop results in the system instructing the machine to move its operative unit (i.e., to move to a particular location), and the second loop results in the system doing the opposite: to let the machine stop its operative unit from moving. Since STOP has priority over MOVE, the system executes the loop in different granularities that are defined by different repetition intervals. The system executes the first loop at a first rate, and executes the second loop at a second rate that is shorter.

In performing the first loop, the system monitors a human operator to determine the position data for at least one hand of the human operator. The system processes the position data to identify a location for the operative unit of the industrial machine and instructs the industrial machine to move the operative unit to the identified location.

In performing the second loop, the system determines a hand modality attribute. The attribute represents a pre-defined pair of particular fingers of the hand touching each other or not. Upon determining a particular stop modality attribute, the system instructs the industrial machine to stop the operative unit moving.

From a different perspective, the disclosure presents a computer system for obtaining control signals to control the operation of an industrial machine. The industrial machine has an operative unit. The computer system monitors movement of a human operator. A position monitor module is adapted to monitor the human operator and thereby to determine position data for at least one hand of the human operator at a first repetition interval. A modality monitor module is adapted to receive a modality attribute of the hand of the human operator at a second repetition interval that is shorter than the first repetition interval by a pre-defined factor. The modality monitor module is adapted to receive the modality attribute from a modality converter that processes modality data indicating for a pair of particular fingers of the hand if these fingers are touching each other or not touching. A processing module is adapted to receive position data from the position monitor module and to receive the modality attribute from the modality monitor module. The processing module is further adapted to provide a control signal to the industrial machine. The control signal causes the industrial machine to move or to stop the operative unit depending on the modality attribute.

Optionally, the position monitor module is associated with an image capturing device, and the position monitor module is adapted to obtain the position data by image processing.

Optionally, the image capturing device is implemented by an RGB-camera.

Optionally, the RGB-camera further comprises a depth sensor.

Optionally, the position monitor module is implemented by a computer function that uses a vision-based skeletal model tracking algorithm.

Optionally, the modality monitor module receives the modality attribute from the modality converter that provides the modality attribute with a first modality value when the modality data indicates that for the pair of the particular fingers the fingers are touching each other, and provides the modality attribute with a second modality value when the particular fingers are not touch each other.

Optionally, the particular fingers are the thumb and the index finger, or are the thumb and the middle finger.

Optionally, the modality monitor is communicatively coupled to a sensor arrangement that is attached to the hand of the operator. The modality monitor receives signals from the sensor arrangement at the second repetition interval, wherein the signals either communicate modality data or the modality attribute.

Optionally, the system further comprises an orientation monitor module that is adapted to monitor the orientation of the hand and to derive roll, pitch and yaw data further used to obtain the control signal.

The disclosure also relates to a sensor arrangement that is adapted for attachment to the hand of a human operator of an industrial machine, for communicating modality data to a computer system that controls the operation of an industrial machine by monitoring movement of the human operator. The modality data indicates for a pair of particular fingers of the hand if the fingers are touching each other or not touching each other.

Optionally, the sensor arrangement comprises fingertip sensors, selected from the following: conductive material being attached to the particular fingers to establish an electrical connection when the two particular fingers touch each other; an induction sensor with a coil at one particular finger and a core at the other particular finger, wherein an inductivity is above a pre-defined threshold when the two particular fingers touch each other; and a combination of a hall sensor and a magnet.

Optionally, the sensor arrangement further comprises an orientation sensor to provide orientation data of the hand.

Optionally, the sensor arrangement is implemented by a glove-like apparel.

A computer-implemented method to operate an industrial machine, comprising the following steps in loops: In a first loop that is periodically executed at a first repetition interval, the computer monitors a human operator to determine the position data for at least one hand of the human operator, processes the position data to identify a location for an operative unit of the industrial machine, and instructs the industrial machine to move the operative unit to the identified location. In a second loop that is periodically executed at a second repetition interval that is shorter than the first repetition interval, the computer determines a hand modality attribute, wherein the modality attribute represents a pre-defined pair of particular fingers of the hand touching each other or not, and upon determining a particular modality attribute, the computer instructs the industrial machine to stop the operative unit moving.

A computer program product that - when loaded into a memory of a computer and being executed by at least one processor of the computer causes the computer to perform the steps of the computer-implemented method.

### Brief Description of the Drawings

FIGS. 1A and 1B illustrate an industrial machine, a computer system and a human operator at different points in time;
FIG. 2 illustrates a time diagram for position data and a modality attribute that become available at different repetition intervals; and illustrates a control signal that the system derives from the data and from the attribute;
FIG. 3 illustrates the operative unit of the industrial machine in view from above in two locations, to explain the timing of first and second repetition intervals;
FIG. 4 illustrates the computer system that controls the industrial machine, with further details, and illustrates the operator who wears a sensor arrangement;
FIGS. 5-6 illustrate the sensor arrangement with further details, for the arrangement attached to the hand of the operator;
FIG. 7 illustrate the sensor arrangement not attached to the hand;
FIG. 8 illustrates a circuit diagram for electronic components of an electronic unit that belongs to the sensor arrangement in an example implementation;
FIG. 9 illustrates a time diagram for determining a multi-value modality attribute;
FIGS. 10A and 10B illustrate two basic approaches to implement a modality converter;
FIG. 11 illustrates a flow-chart diagram of a method to operate the industrial machine; and
FIG. 12 illustrates a generic computer.

### Detailed Description

### Overview

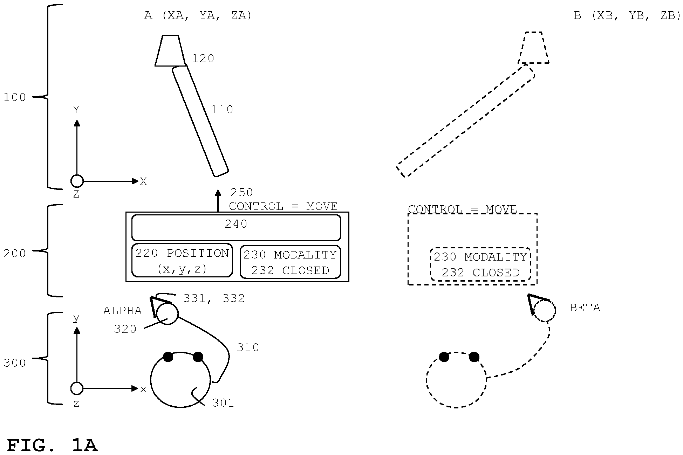

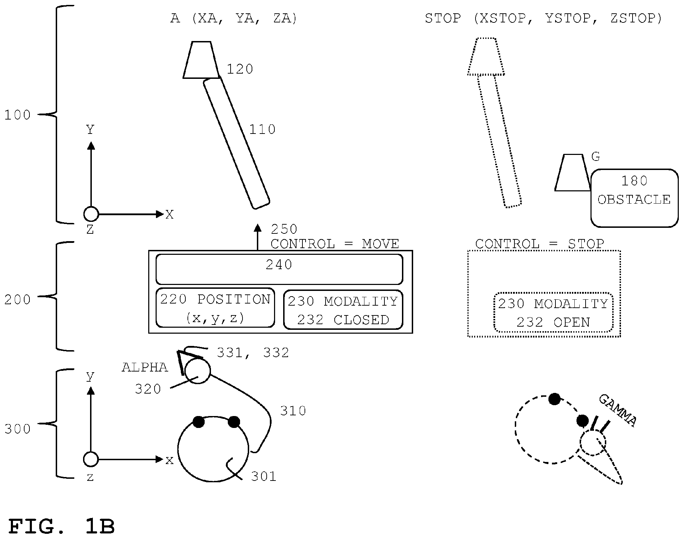

FIGS. 1A and 1B illustrate industrial machine 100, computer system 200 and human operator 300 at different points in time. Hereinafter, and only to keep the text simple, the description shortens the terms to "machine", "system" and "operator".

Much simplified, system 200 monitors operator 300 and controls machine 100 accordingly. System 200 performs both activities (i.e., monitoring and controlling) in two granularities that are related to the anatomy of operator 300.

In the first granularity, system 200 monitors the position of operator's hand 320 to control the location of operative unit 120 ("op-unit", of machine 100). There is a hand to op-unit analogy. Simplified, system 200 controls machine 100 to move op-unit 120 in correspondence to the monitored hand position. Such an approach with monitors that track body movement has been mentioned above.

Deviations from normal operation deserve closer attention. In the moment operator 300 is being distracted, operator 300 moves his fingers. For example, operator 300 initially touches thumb 331 with index finger 332 (cf. FIG. 1A), but when distracted he would open hand 320 so that fingers 331/332 no longer touch each other (cf. FIG. 1B). Operator distraction is one example of many reasons why operator 300 could move unexpectedly.

Even worse, operator 300 would not only move the fingers, but he might also move his arm 310. Consequently, system 200 could eventually move its op-unit 120 into obstacle 180 or the like (cf. FIG. 1B).

Therefore, system 200 does not process the hand position alone. In the second granularity, system further processes the modality of the hand. The description defines "hand modality" as the observation of pairs of particular fingers (of the operator's hand) touching each other (or not touching each other), and - optionally - the length of the time interval during which these particular fingers touch each other (or not).

System 200 processes the modality to control machine 100. Simplified, and with more details to be explained below, system 200 controls machine 100 in dependence on the hand modality. In a "safety first" example, operator 300 opens hand 320, and system 200 controls machine 100 to stop op-unit 120 (in other words, to prevent op-unit 120 moving).

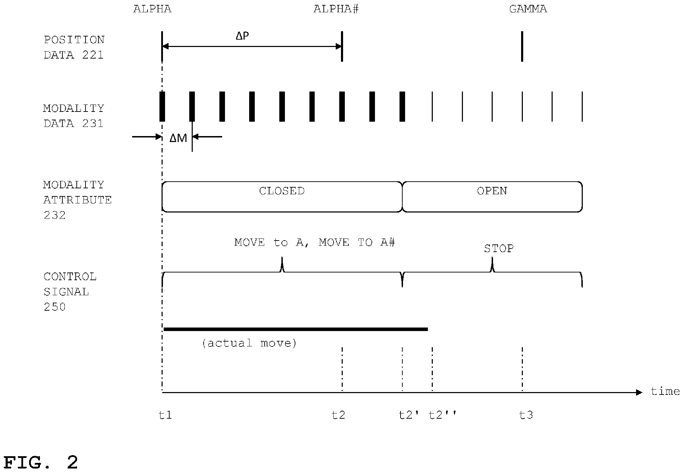

The technical delay between both activities (from opening the hand to stopping the machine) should be short enough to prevent machine 100 (i.e., op-unit 120 or other parts) from moving into obstacle 180. Therefore, system 200 performs monitoring in two monitoring granularities that are differentiated by the monitored objects (as mentioned), by different time intervals (or "repetition intervals") and by different modules:
- (macro granularity) System 200 has position monitor module 220 (or "position monitor" in short) that determines the position (x, y, z) of hand 320 (of operator 300, and/or optionally, of other parts of the body such as arm 310) at a first repetition interval ΔP (a relatively long interval).
- (micro granularity) System 200 has modality monitor module 230 (or "modality monitor" in short) that receives modality attribute 232 of hand 320 at a second repetition interval ΔM. The second repetition interval ΔM is relatively short. ΔM is shorter than the first repetition interval ΔP by a pre-defined factor K. Modality monitor 230 receives a modality attribute from a modality converter that processes modality data. In the example of FIGS. 1A and 1B, the modality data indicates that a pair of (two) particular fingers (331, 332) of hand 320 are touching each other (or not). To keep FIGS. 1A and 1B simple, further details for modality data and modality attribute are explained with FIG. 2.

One reason for this macro-micro separation (of granularity) is the potential complexity of a one-for-all sensor (cf. the above constraints, among them the delay, tracking accuracy, media breaks etc.).

Monitoring (or tracking) hand positions is known in the art, cf. the above-mentioned papers. However, achieving a sufficiently high position accuracy (that translates into location accuracy of the machine) requires relatively high efforts in monitoring equipment (such as cameras or other sensors), processing resources and the like.

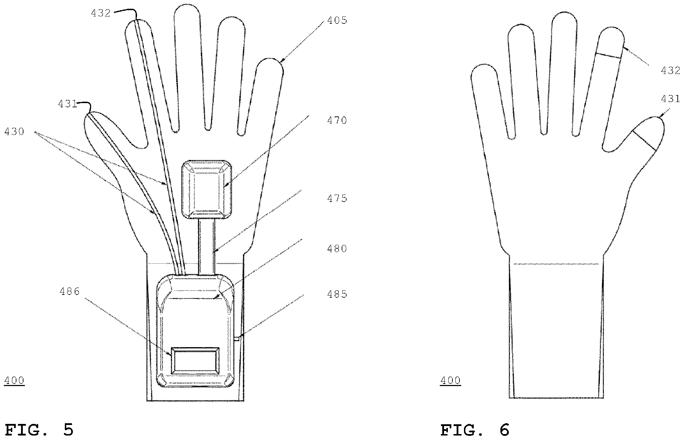

Monitoring the hand modality only requires relatively easy-to-fabricate and easy-to-run sensors (cf. an example in FIGS. 5-8). In that sense, modality monitor 230 (in communication with the sensors) compensates insufficiencies of position monitor 220.

In other words, position monitor 220 does not have to monitor the hand modality.

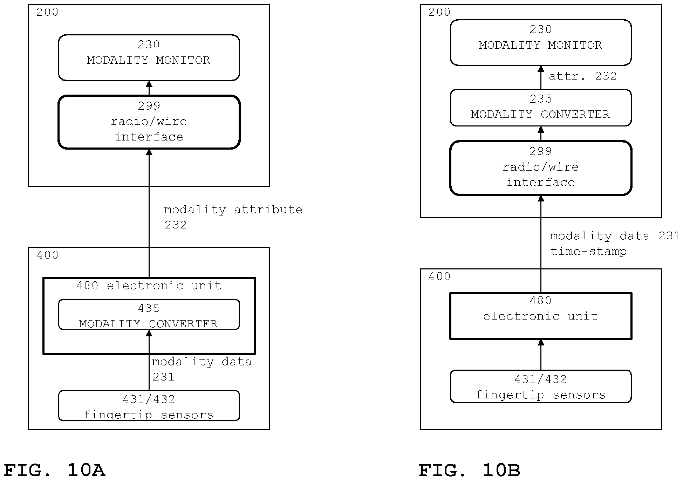

The description of FIGS. 1A, 1B and 2 is simplified by explaining modality attribute 232 with binary values CLOSED and OPEN that result from different modality data 321 as "touch" and "no touch". In that example, the modality converter simply receives data in the meaning "touch" and sets the attribute to CLOSE, and receives data "no touch" and sets the attribute to OPEN. Implementation examples for the modality converter will be introduced in references to FIGS. 10A and 10B.

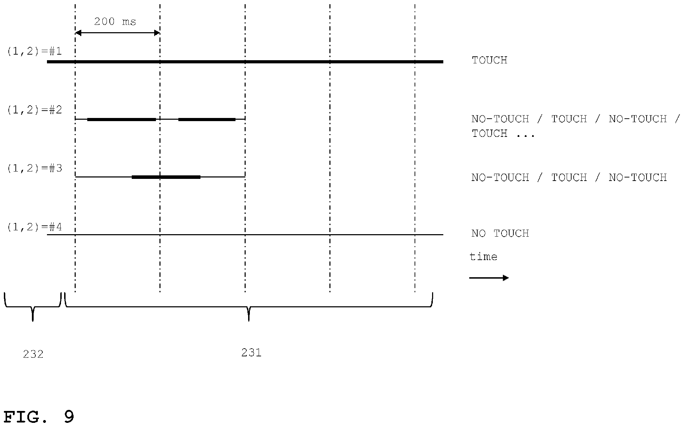

A modality attribute with multiple values will be explained with FIG. 9, so that the modality takes the duration of "touch" and "no touch" into account.

The description uses "repetition" to explain that receiving data, determining the position and determining the modality attribute are ongoing processes that are repeated at time intervals ΔP, ΔM (i.e., repetition intervals).

### Machine with op-unit

Machine 100 comprises location change unit 110 (narrow rectangle symbol) and operative unit 120 (or "op-unit" in short, trapezoid symbol). Operating machine 100 comprises to re-locate operative unit 120 between particular locations in space.

Machine 100 interacts with a work-piece (or the like) at a particular location. Op-unit 120 is related to the function of the machine. The following examples stand for many more functions:
- The machine can be a crane that lifts objects, with a hook, a magnet, a gripper or other tool being the op-unit.
- The machine can be a drilling machine with the op-unit being a driller that needs to be positioned over a work-piece, before drilling.
- The machine can be a surface painting device, with the op-unit being a spray painter nozzle.
- The machine can be a surface modifying device such as an abrasive blaster (with the op-unit being the nozzle).

Location change unit 110 can be implemented by well-known technologies, and comprises actuators such as drives, motors, gears, hydraulic or pneumatic drives, chains, and others. Movements can be linear movements, rotational movements, or combinations thereof.

Machine 100 can be implemented as a robot. In such a case, location change unit 110 can be a robot arm, and op-unit 120 can be an end-effector or tool center point (TCP) of the robot. The skilled person also is familiar with the concept of End-of-arm-tooling (EOAT). The robot arm can have joints in that actuators are embedded, with individual motors or the like, but that is not required. Much simplified, the robot can implement the functions that are mentioned, or can implement other functions.

The robot can be implemented for direct human robot interaction within a shared space (as a "cobot" or "collaborative robot"). In this case, a person in the shared space (not necessarily operator 300) would be an example for obstacle 180.

The location of op-unit 120 is given by Cartesian coordinates in upper-case letters (X, Y, Z). Location data represents the location in space of op-unit 120 of machine 100 given. Of course, the skilled person can apply different coordinate systems.

Op-unit 120 is illustrated in FIG. 1B with a potential collision with obstacle 180, the location change unit 110 could hit obstacle 180 as well. Stopping op-unit 120 to move (or, from moving) usually implies to stop unit 110 as well.

### Computer system

System 200 is a computer system (or "computer" in short) for obtaining control signal 250 to control the operation of machine 100 by monitoring movement of operator 300. Control signal 250 represents at least a start location and a target location for op-unit 120, such as location A and location B, respectively. The skilled person can process control signal 250 to derive low-level signals to the actuators (of unit 110).

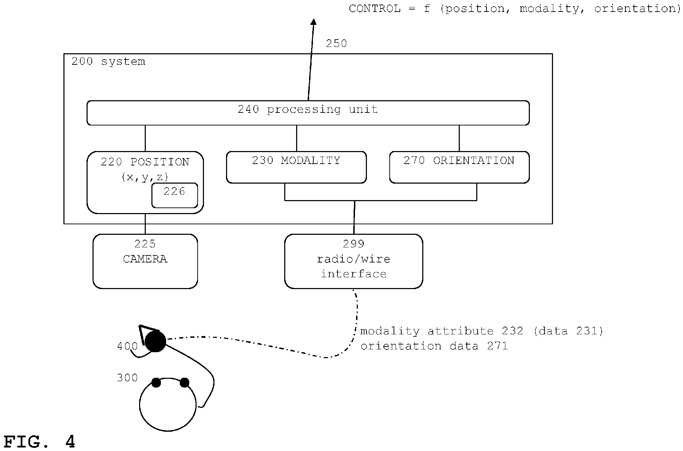

System 200 comprises the following components: Position monitor 220 is adapted to monitor operator 300 and to determine position data (x, y, z) for at least hand 320 of operator 300. Modality monitor 230 is adapted to receive the hand modality attribute (in the example of the figure given by an attribute with the binary values CLOSED and OPEN) of the hand 320 of operator 300. Processing module 240 (cf. FIGS. 2 and 4) is adapted to receive position data (x, y, z) from position monitor 220 and to receive the modality attribute (cf. 232 in FIG. 2) from modality monitor 230. Processing module 240 is further adapted to provide control signal 250 to machine 100. Control signal 250 causes machine 100 to move (at least in the differentiation into MOVE or STOP) depending on the modality attribute.

System 200 can be implemented by one or more computers. For example, the modules can be distributed to different physical computers (for example, one computer for module 220, one for module 230, one for module 240). Distributed modules and units can be connected to communicate, for example, by networks or other connections. As connections may introduce delays, measures may be taken to deal with the consequences (cf. FIG. 10B communicating time-critical data with time-stamps).

Functionality to convert modality data (e.g., fingers touch or not) into the modality attribute (e.g., CLOSED, OPEN) can be implemented in system 200 (cf. FIG. 10B with modality converter 235) or can be implemented in a sensor arrangement (cf. FIG. 10A with modality converter 435).

FIGS. 1A and 1B also illustrate a computer program or a computer program product. The computer program product - when loaded into a memory of a computer and being executed by at least one processor of the computer - causes the computer to perform the steps of a computer-implemented method. In other words, the program provides the instructions for the modules.

There is no need to show system 200 to operator 300. It is however contemplated - at least in one embodiment - that position monitor 220 captures images of operator 300 (by an image capturing device, for example by a camera, not illustrated).

### Human operator

Operator 300 is illustrated in view from above. Operator 300 has body parts such as head 301 with the eyes usually directed to machine 100 (or to a computer display that shows the machine). Operator 300 has arm 310 and hand 320. Description and drawings refer to "the hand" in singular. There is no difference between right and left hand scenarios.

FIGS. 1A and 1B simplify hand 320 by a circle. Fingers can be differentiated into particular fingers: thumb 1, index finger 2, middle finger 3, ring finger 4, little finger 5. Any combination of two fingers can be pre-defined to form a finger pair (n, m), from (1,2) to (4,5). The indices are n = 1, 2, 3, 4 or 5, m = 1, 2, 3, 4 or 5, but n ≠ m. The figures symbolize thumb 331 and index finger 332 by way of example. The two fingers of the pair belong to the same hand.

In the following, phrases like "closing fingertips" indicate that operator 300 lets a finger pair touch each other (by the fingertips). In the example, operator 300 keeps thumb 331 and index finger 332 touching each other (corresponding to attribute CLOSED) or not touching (corresponding to OPEN). As used herein, "touching" means that fingertips touch each other (the skin above the bones "distal phalanges", or "intermediate phalanges"). The fingers do not have to touch directly by the skin, they can touch indirectly (for example through sensors, clothing, etc.).

In a general notation, the attributes can be represented by - for example - (n, m) = CLOSED, or (n, m) = OPEN, or noted as (n, m) = #value (cf. FIG. 9).

In view of the above-introduced operator distraction, some finger pairs (n, m) may have different interaction patterns with the operator. For example, pair (1,5) may require more efforts to touch and pair (1,2) may require less efforts. Operator 300 may open pair (1,5) at a relatively low degree of distraction (i.e., the attribute would change from (1,5) = CLOSED to (1,5) = OPEN), while he would keep pair (1,2) still closed.

Image capturing devices (and other devices) can theoretically capture movements of all (visible) body parts, "from head to toe". As many industrial robots imitate arms and hands, the description is simplified and therefore focuses on capturing movement of the hand. A robot may have more joints than a human, but that is not relevant here. Image capturing devices may very well detect finger touching, but the computational efforts would be relatively high, and the accuracy would be relatively low.

Position data represents the position of hand 320 and it is given by lower-case coordinates (x, y, z).

As system 200 lets machine 100 imitate the position of the hand, there is a (directed) position-to-location correspondence: position ALPHA of hand 320 corresponds to location A (XA, YA, ZA) of op-unit 120, position BETA to location B (XB, YB, ZB), and so on.

The figures occasionally illustrate movement over time by using different lines, such as the movement of hand 320 from a first position (such as ALPHA) at a first point in time (plain lines) to a second position (such as BETA) at a second point in time (dashed lines). There is an intermediate location in dotted lines. The line types are also applied to op-unit 120.

### Simplified example scenarios

To explain the operation of system 200, machine 100 has been instructed to move its op-unit 120 from location A to location B. (For robots, such activities are known by terms such as "pick and place" or others).

FIG. 1A illustrates that the A-to-B move can be completed, and FIG. 1B illustrates that the move can be interrupted either at obstacle 180 or at a stop location STOP (XSTOP, YSTOP, ZSTOP), without hitting the obstacle.

In a first scenario of FIG. 1A, operator 300 moves hand 320 to location ALPHA (shown on the left side of the figure) and then moves hand 320 to location BETA (shown on the right side). Machine 100 with op-unit 120 would just follow from location A to location B. The figure is simplified by changing the location in the X-coordinates only.

Still in the first scenario, but modified as in FIG. 1B, operator 300 initially moves hand 320 to location ALPHA and then starts moving the hand to location BETA. However, the operator is distracted and suddenly moves the hand to GAMMA (but not to BETA). The figure symbolizes this behavior by showing the head looking away from machine 100 and by moving the hand to the head. Such situation can not be avoided. The op-unit (of the industrial machine) would just follow that path and potentially hit obstacle 180 (at or near location G, corresponding to position GAMMA). This is of course not desired. It does not matter if obstacle 180 is a part of machine 100 or not, obstacle 180 can also be a person (e.g., in the above-mentioned co-robot application). This underlines the need to avoid collisions in any case.

The second scenario takes advantage in the capability of system 200 to process modality as well.

In the second scenario, cf. FIG. 1A, operator 300 moves the hand to position ALPHA, closes the fingertips (modality monitor 230 receives the modality attribute as CLOSED), moves the hand to position BETA, and opens the fingertips.

Machine 100 just follows and moves op-unit 120 from A to B. This is the desired operation.

In the second scenario, but modified, cf. FIG. 1B, the operator moves the hand to position ALPHA and then closes the fingertips. As mentioned, he is suddenly distracted (not avoidable) and moves his hand to position GAMMA. Due to the distraction, he opens the fingertips. System 200 recognizes this event (by modality monitor 230) and stops machine 100 (i.e., its op-unit 120) from moving.

Op-unit 120 (of machine 100) does not reach the equivalent real-world location G. In this second, but modified scenario, machine 100 does not reach location B (operator 300 does not present BETA), but does not reach obstacle 180 either.

To achieve that outcome, the components of system 200 take advantage of different repetition intervals, for processing data. This will be explained in the following.

### Timing

FIG. 2 illustrates a time diagram for position data 221 and for modality data 231 that become available at different time intervals. The figure illustrates data availability by short vertical lines. The figure also illustrates control signal 250 (cf. FIGS. 1A, 1B) that system 200 derives from the data.

Position data 221 becomes available at time intervals ΔP, here shown by equidistant time points t1, t2 and t3. For example, position data at t1 indicates the position ALPHA (cf. FIG. 1B), position data at t2 indicates the position at ALPHA# (a position with a slight offset to ALPHA), and position data at t3 indicates the position at GAMMA (cf. FIG. 1B, the user would be distracted).

Shortly after receiving position ALPHA (i.e., position data 221), system 200 would instruct machine 100 via control signal 250 to move its op-unit 120 to location A (that corresponds to position ALPHA cf. FIGS. 1A, 1B). The figure illustrates control signal 250 as "MOVE".

The same principle applies to ALPHA# and - in theory - to GAMMA. From t2, system 200 would instruct a move to A#, and from t3, but system 200 does not instruct the move to G.

Modality data 231 becomes available at time intervals ΔM, here illustrated by equidistant time points as well, but with ΔP = ΔM * K. For example, the factor is K = 6. In the example, modality data 231 is binary "closed fingertips" (bold lines) and "open fingertips" (thin line).

Modality monitor 230 receives modality attribute 232. In the example, the modality attribute is given by corresponding values CLOSED and OPEN. FIG. 2 follows the simplification. The description will explain below that further modality attributes can be used as well (cf. FIG. 9).

Initially at t1, modality attribute 232 has the value CLOSED.

Shortly after t2 - in the example at t2' (t2' = t2 + 2*ΔM) - operator 300 gets distracted and starts moving his hand (towards GAMMA) but also opens the fingertips. Modality monitor 230 recognizes this. The modality attribute changes from CLOSED to OPEN.

As a consequence, system 200 (i.e., the processing module) lets machine 100 stop (i.e., stop at least its op-unit). Control signal 250 changes accordingly. The figure illustrates the change with a delay (approximately ΔM) at t2". Control signal 250 changes from MOVE to STOP.

The time from receiving the CLOSE to OPEN transition (modality attribute) until machine 100 actually has stopped (its op-unit 120) is sufficiently small. Op-unit 120 does not reach an undesired location (that corresponds to GAMMA). In the example, collision would be avoided.

At t3, system 200 may still receive a position update, but that is being ignored. Position monitor 220 can still be operating, there is no need to switch it off. "Ignoring" would be a simple instruction in processing module 240.

The skilled person can select ΔP = ΔM * K accordingly, taking into account how fast machine 100 (i.e., its op-unit 120) is moving. An example will be discussed in the following.

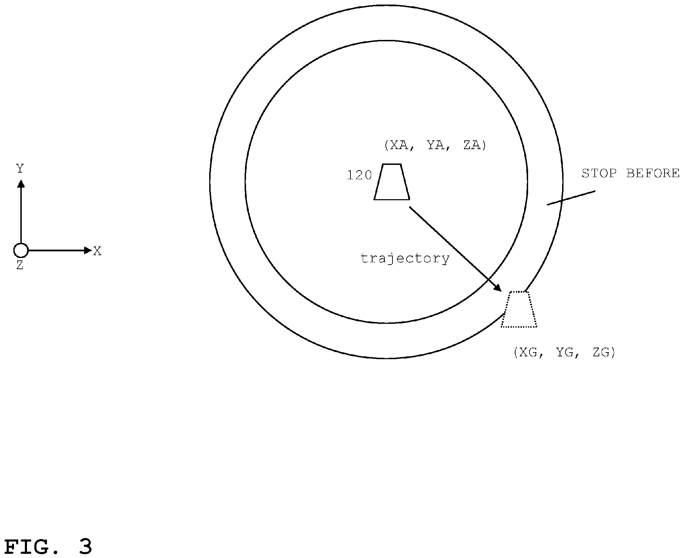

FIG. 3 illustrates op-unit 120 of the industrial machine in view from above in two locations A and G (corresponding to hand positions ALPHA and GAMMA), to explain the timing of first and second repetition intervals.

For explanation it can be assumed that op-unit 120 was at location near A (approximately at a time point after t1, cf. FIG. 2) and that system 200 derived control signal 250 such that op-unit 120 started moving to location G. As in the example, the re-location lets op-unit 120 move in X-direction (i.e., in the example positive ΔX) and in Y-direction (i.e., in the example negative ΔY). Op-unit 120 therefore describes a trajectory with a certain length that can be estimated, for example, by using the Pythagorean theorem (the length corresponding to the hypotenuse in a triangle with a right-angle).

The time it takes to move between locations (here A and G) approximately corresponds to the time interval ΔP (new position information availability every ΔP, in repetitions, cf. FIG. 2).

Assuming approximately equal speed in both directions (Z is ignored here), op-unit 120 could reach a location indicated by the outer circle. The radius of the outer circle approximately corresponds to the trajectory that the op-unit can move during the time interval ΔP

To avoid collisions (or other unwanted trajectories), op-unit 120 needs to stop before (cf. the inner circle). Taking the processing delays into account (cf. FIG. 2), the time interval ΔM must be shorter than ΔP.

The skilled person can take further effects into account. Op-unit 120 and location change unit 110 may oscillate (spring and mass resonance) and may show inertia. But as a basic rule, K is selected such that an op-unit move (even instructed and already ongoing) can be interrupted before op-unit would hit obstacle 180. Simplified, at any time, obstacle 180 is located away from op-unit 120 in a safety distance that corresponds to a move during the shorter repetition interval ΔM. The skilled person will introduce some extra distance to deal with tolerances.

### Exemplary timing

In view of the above-mentioned relation ΔP = ΔM * K, the factor can be in the range from (including) K = 4 to (including) k = 8. A suitable value is K = 6.

It is convenient to describe repetitions by frequencies (i.e., event/interval). ΔM can be set to 0,011 seconds (or 11 milli seconds in terms of a modality frequency 90 Hz). ΔP can be set to 0,066 seconds (or 66 milli seconds in terms of a position frequency 15 Hz).

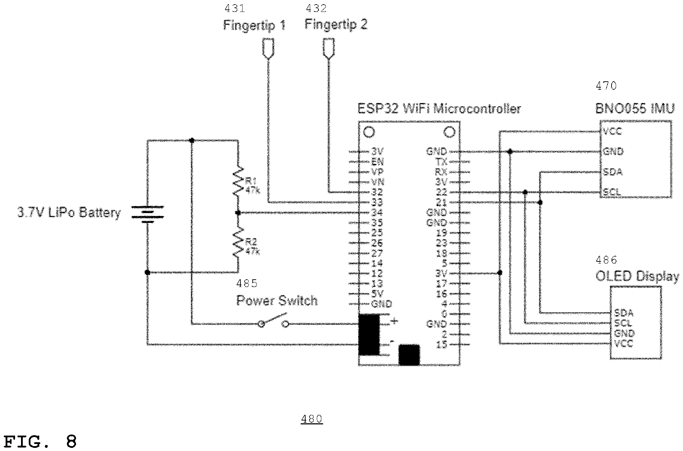

Convenient values for ΔM correspond to the rate by that data is communicated in data-packages, cf. FIG. 8. However, data-packages can be communicated at still shorter rates.

### Machine, operator and sensor arrangement

FIG. 4 illustrates system 200 that controls the industrial machine, with further details; and illustrates operator 300 and sensor arrangement 400.

The figure illustrates system 200 again with position monitor 220 and modality monitor 230 from FIGS. 1A, 1B. Optionally, position monitor 220 is associated with image capturing device 225, so that position monitor 220 is adapted to obtain the position data (x, y, z) by image processing.

Image capturing device 225 can be implemented by an RGB-camera. The RGB-camera can further comprise an infrared depth sensor (RGB-D camera). The skilled person can obtain depth information by applying infrared depth sensors, lidar sensors ("light detection and ranging"), laser radar, stereo vision, or otherwise.

Depth-enhanced devices are commercially available. For example, Microsoft Corporation (Redmond, Washington, United States) provides motion sensing input devices under the name KINECT.

To implement image processing, position monitor 220 can comprise computer function 226 that uses a vision-based skeletal model tracking algorithm (also known as "skeletal tracking algorithm").

Optionally, system 200 can comprise orientation monitor module 270 ("orientation monitor" in short) that is adapted to monitor the spatial orientation of the hand (320 cf. FIGS. 1A, 1B). Monitor 270 can obtain orientation data - such as roll, pitch and yaw data - and use that orientation data to obtain control signal 250 (for fine-controlling op-unit 120).

FIG. 4 further illustrates sensor arrangement 400 (for position data, and optionally orientation data) of the hand. Arrangement 400 is not part of system 200 but is communicatively coupled to system 200. The figure symbolizes the coupling by interface 299 that provides modality data 231 to modality monitor 230 and (optionally) provides orientation data 271 to orientation monitor 270, via a radio link or via a wire link. (In an alternative implementation, interface 299 receives the modality attribute and forwards the attribute to modality monitor 230, cf. FIG. 10A.)

Control signal 250 is a function of the hand position (x, y, z), the modality attribute (for example, CLOSED/OPEN) and (optionally) the orientation of the hand (roll, pitch, yaw) or (r, p, y). Orientation can also be represented by other coordinates, such as by quaternion representation (q1, q2, q3, q4).

The priority of the modality attribute (e.g., CLOSED, OPEN) over the position with regard to move instructions has been explained already.

### Details

FIGS. 5-7 illustrate sensor arrangement 400 with further details. As sensor arrangement 400 is adapted for attachment to hand 320 (of operator 300, cf. FIGS. 1A, 1B), the figures illustrate arrangement 400 attached to the (right) hand, with FIG. 5 showing the back-side, and FIG. 6 showing the front-side (or "palm-side"). The skilled person can adapt arrangement 400 for left hand use, and can fit its dimensions to different operators.

Fingertip sensors 431 and 432 determine if - for the pair of particular fingers - the fingers are touching each other, or not touching. As already explained, this leads to modality data 231.

Corresponding to the notation in FIGS. 1A, 1B (thumb 331, and index finger 332), FIGS. 5-6 uses references for fingertip sensor 431 at the tip of the thumb, and fingertip sensor 432 at the tip of the index finger. The selection of these fingers is an example. Sensors at other fingers would have different references, but identical function.

The skilled person can implement fingertip sensors 431/432 by state-of-the-art techniques, such as the following: (i) There can be conductive material attached to the particular fingers (e.g., fingers 331, 332) to establish an electrical connection when the fingertips are touching. Such an approach is robust and potentially not sensitive to electrical fields in the environment. FIG. 6 shows fingertip sensors 431/432 that look like thimbles. (ii) There can be an induction sensor with a coil at one particular finger and a (magnetic) core at the other particular finger. The skilled person can use inductivity thresholds or the like to detect if the fingertips do touch, or not. (iii) There can be a combination of a hall sensor and a magnet. (iv) Micro-switches can be combined with fingertips as well. In that case, installing a switch to one finger may be sufficient.

Sensors 431/432 are electrically coupled to electronic unit 480. The coupling is illustrated by flexible wires 430. The skilled person can implement the wires without the need of further explanation herein.

Electronic unit 480 comprises sensor electronics (to detect that the connection is established or not, to derive a signal depending on the inductivity, etc.). The skilled person can implement them, the figure therefore mentions the electronics symbolically: power switch 485, status display 486 (allowing the operator to test the arrangement, etc.).

Electronic unit 480 can also comprise the modality converter that provides modality attribute 232 (cf. FIG. 4). Such an approach will be further explained with FIG. 10A.

Sensors 431/432 and electronic unit 480 can be attached to glove 405. But such an approach is not required. There is no need for a glove that covers all fingers. The glove may simply have sleeves for the finger pair, such as for pair (1,2) in the example.

Electronic unit 480 may be attached to the wrist or to the forearm.

Glove 405 is rather a glove-like apparel. Using a glove or the like may be advantageous because operators in industry tend to wear them anyway. Wires or other conductors can be implemented to the fabric of a glove.

Implementing sensor arrangement 400 into gloves or the like may also be advantageous for the following reason: A sensor that detects "finger closed" can be implemented by a physical thing that the operator could hold in the hand, similar to a remote control for a TV set. However, the operator - if distracted - would very likely keep holding that thing. In case of a glove (or the like), the operator would not hold a thing in the hand.

Optionally, sensor arrangement 400 can comprise orientation sensor 470 to provide orientation data 471 (cf. FIG. 4) of hand 320. Sensor 470 can be implemented by a commercially available inertial measurement unit (IMU). As illustrated, orientation sensor 470 is connected to electronic unit 480 via conductors 475.

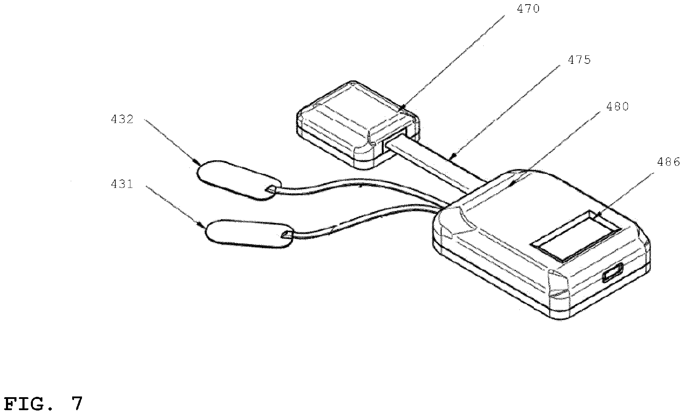

FIG. 7 illustrates sensor arrangement 400 with further details, but in a view without the glove and not yet attached to the hand. References correspond to that of FIGS. 5-6. Fingertip sensors 431 and 432 are illustrated by the option of conductive material that is attachable to the particular fingers. There is no need to use a glove, the components of arrangement 400 can be attached to the hand otherwise. The skilled person can apply, for example, adhesive tape (such as adhesive bandage, medical plaster), finger rings (to carry the fingertip sensors), half-rings (the sensors look like fingerpick or thumbpick plectrums known in music), hook-and-loop fasteners, or can apply other measures.

### Circuit Diagram

FIG. 8 illustrates a circuit diagram for electronic components of electronic unit 480 that belongs to an implementation of sensor arrangement 400. The figure also illustrates components that are optional (cf. FIG. 6), such as orientation sensor 470, optional power switch 485, optional display 486 etc. The components are commercially available, for example, from Adafruit Industries (New York City, NY, United States). The implementation is an example, and the skilled person can use components from other sources.

Orientation sensor 470 can be implemented by an inertial measurement unit (IMU) of the type BNO055 (the unit integrates accelerometer, gyroscope and magnetometer). A radio component can be implemented by a microcontroller with a wireless data transmitter, in the example of the type ESP32 WiFi microcontroller. The transmitter can operate in the Wireless Local Area Network (WLAN) protocol, the BLUETOOTH protocol, or otherwise. The components can be placed to a printed circuit board (PCB). Display 486 is implemented by an LED (or OLED) arrangement to show battery charge, WLAN connectivity and power status. Unit 480 can be powered by a 3.7 volt rechargeable Lithium Polymer (LiPo) battery, and switched on or off by switch 485 (here a toggle switch).

Again, the description mentions particular components by way of example. The skilled person can select the components from a variety of components that are commercially available.

The skilled person does not have to apply such an implementation. Different alternatives for the finger sensors may require different and/or additional circuitry.

The skilled person is also able to program the microcontroller accordingly, for example, to implement the wireless data connection and - optionally - to implement the modality converter (cf. FIGS. 9, 10A, 10B).

### Multi-value modality attribute

FIG. 9 illustrates a time diagram for determining modality attribute 232 being a multi-value attribute. The description differentiates between modality data 231 (that is provided by sensor arrangement 400 and that is received by modality monitor 230) and modality attribute 232 (that modality monitor 230 calculates from modality data 231).

In other words, there is a conceptual difference between the radio/wire signal at interface 299 (i.e., the signal that carries modality data 231, cf. FIG. 4) and the modality attribute 232 that modality monitor 230 derives therefrom. The signal at interface 299 indicates if fingers are in touch with each other or not, and modality monitor 230 calculates the modality attribute (with the modality converter being associated with monitor 230).

So far, modality attribute 232 has been explained with binary modality values (e.g., CLOSED/OPEN). However, in view of the regular transmission of data (cf. the radio/wire interface 299) at repetition interval ΔM (or even shorter), further information can be coded. The following are just examples:

Two fingertips sensor 431/432 can indicate that the fingers touch. For example, this is the case when the thumb (finger 1) and the index finger (finger 2) are touching each other. For a human observer that looks like an "OK" gesture or the like. Arrangement 400 triggers a Boolean variable (and communicated this a modality data 231, cf. FIG. 2, the vertical lines).

Based on this data, further modality values can be defined:
- Pinch gesture (modality value (1,2)=#1): continuous finger touching is detected for a period of at least 800 milliseconds.
- Double tap gesture (modality value (1,2)=#2): exactly two touching events (i.e., touch and remove) detected during less than 400 milliseconds.
- Single tap gesture (modality value (1,2)=#3): exactly one touching detected in 400 milliseconds.

This translates into at least four modality values ((1,2)=#4 for "no touch"). It is noted that the example basis interval 400 milliseconds is much longer than the sampling interval. The sampling interval can correspond to ΔM or can be shorter.

Considering further finger pairs is possible, the example with pair (1,2) is just an example.

System 200 can control machine 100 with more accuracy. The skilled person can map modality values to machine actions. For example, value #4 would be mapped to STOP (the machine stops operating, when the fingers no longer touch), values #1, #2 and #3 can be mapped to pre-defined operations of op-unit 120.

In a simplified example, op-unit 120 is a gripper and system 200 can translate the different values to let the gripper open, approach a work-piece, close, etc.

### Implementation of the modality converter

FIGS. 10A and 10B illustrate two basic approaches to implement the modality converter. In both implementations, system 200 comprises radio/wire interface 299 (cf. FIG. 4) that receives signals in the form of data-packages from electronic unit 480 (cf. FIG. 5) of arrangement 400.

In the first implementation (FIG. 10A), modality converter 435 is software-programmed as a function of electronic unit 480. As explained above (FIG. 5), fingertip sensors 431/432 provide modality data (e.g., current flow for touching fingers). Converter 435 translates the data into the modality attribute 232 (e.g., binary CLOSED/OPEN or multi-values attributes #1 to #4 of FIG. 9). Electronic unit 480 sends out the data-packages such that modality attribute 232 arrives at interface 299/monitor 230 at least at the second repetition interval ΔM.

In the second implementation (FIG. 10B), modality converter 235 is software-programmed as a function of system 200. It can be implemented by the same computer together with modality monitor 230. Again, it does not matter if modality attribute 232 has binary values or multiple values.

However, for modality attributes that take the time intervals between "touch" and "no touch" into account, cf. FIG. 9, the inherent propagation delay for the data-packages (from unit 480 to interface 299) could influence the accuracy. Therefore, fingertip sensors 431/432 provide modality data 231, and unit 480 communicates the data together with time-stamps (or other information), so that system 200 can obtain the attribute. It is required to transmit the data-packages with sufficiently short repetition intervals that allow modality monitor 230 receive the modality attribute at ΔM.

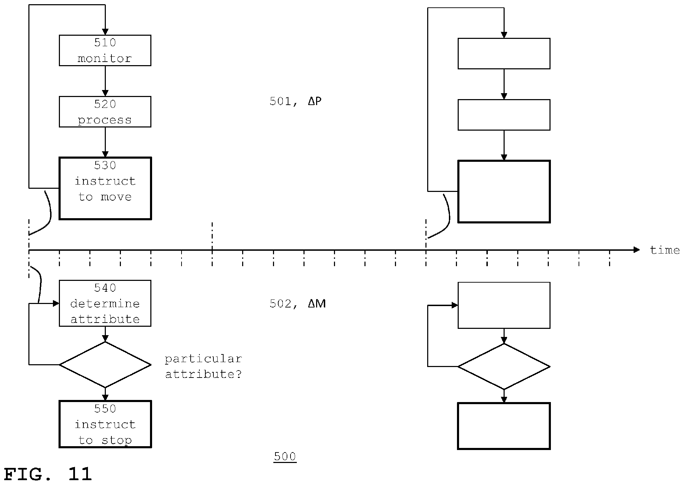

FIG. 11 illustrates a flow-chart diagram of computer-implemented method 500 to operate industrial machine 100. The method is performed by a computer (that FIGS. 1A, 1B, 4, 10A, 10B show as system 200).

In a first loop 501 that is periodically executed at first repetition interval ΔP, the computer monitors (step 510) human operator 300. The computer thereby determines the position data (x, y, z) for at least one hand 320 of human operator 300. The computer processes (step 520) the position data (x, y, z) to identify a location (X, Y, Z) for op-unit 120 (of industrial machine 100, as explained above). The computer instructs (step 530) industrial machine 100 to move its op-unit 120 to the identified location (X, Y, Z). The description has explained these activities in detail, in connection with control signal 250. It is noted that the computer starts instructing the machine to move only for a pre-defined modality attribute (such as CLOSED).

In a second loop 502 that is periodically executed at a second repetition interval ΔM (that is shorter than the first repetition interval ΔP, cf. FIG. 3 for the details), the computer determines (step 540) hand modality attribute 232 (cf. FIGS. 1A, 1B and others). As already explained, the modality attribute represents a pre-defined pair (n, m) of particular fingers (e.g., 331, 332 in FIGS. 1A) of hand 320 touching each other or not. Upon determining a particular modality attribute (for example, 232 OPEN, (1, 2) = OPEN), the computer instructs (step 550) industrial machine 100 to stop operative unit 120 moving (depending on the modality attribute). As explained, the STOP can be implemented via control signal 250 as well.

FIG. 11 illustrates diagrams for both loops above and below a time-line (with ΔP and ΔP intervals). Loop 501 can be considered as a traditional operation for teleoperating an industrial machine, and loop 502 can be considered as an add-on. In some sense, the faster loop competes with the traditional loop.

FIG. 11 is simplified by focusing on the safety aspects (MOVE and STOP the op-unit), and a flow-chart that consider other modalities (cf. FIG. 9) would look similar. It is again noted that a modality transition such as CLOSED to OPEN would cause a STOP instruction 550, but that the operator following up with closing the hand (OPEN to CLOSE transition) would not automatically cause MOVE.

### Stop

Shortly referring back to FIG. 1B, control signal 250 could cause machine 100 to stop moving its op-unit 120. The skilled person understands that safety critical operations may require that movement of some machine parts continues. Safety critical functions of the machine continue to be available. For example, if op-unit 120 would be a gripper (that holds a tool), the gripper would continue holding the tool.

The STOP instruction can also act on the function of op-unit 120. For example, a sprayer nozzle may stop spraying.

The skilled person can also implement hysteresis. For example, opening the fingertips leads to STOP, but closing the fingertips may not lead to MOVE, at least not immediately.

### Use case training

As already explained, system 200 obtains control signals 250 to control the operation of machine 100 by monitoring movement of operator 300.

In real-time scenarios, monitoring and controlling occur at the same time, the operator can actually watch the machine moving.

In time-shifted scenarios, monitoring and controlling occur at different points in time. An example includes training. During multiple training sessions, the operator shows the movements to the machine, with or without corresponding machine movements. The machine then learns to operate independently. Such techniques are known in the art.

However, in both real-time and time-shifted scenarios, there is a danger for the machine to hit the obstacle if the operator does not move his hand correctly. As explained above, system 200 can mitigate these risks.

Training involves collecting data for multiple occurrences into a training set. For example, the operator may move his hand from ALPHA to BETA multiple times, so that the machine eventually learns how to move its op-unit from A to B. Deviations from normal, such as in situations where a distracted operator has his hand elsewhere (cf. FIG. 1B) would be marked with the attribute (e.g., OPEN) so that such situations would not be included in the training set.

In other words, the problem to filter out unwanted machine movements is - at least partially - solved by annotating the data with the modality attributes. A modality attribute that system 200 interprets to stop op-unit 120 moving can be interpreted as a marker to filter out some training data.

### Optional features

The skilled person can implement further measures. The description now explains, by way of example, some of them. (i) Virtual borders can provide extra safety measures. These borders can be derived (during training) from hand positions by that the operator marks the borders. The borders can limit op-unit movements to pre-defined spaces, such as to cuboids, cylinders etc. (ii) Scaling the position (of the hand) and the location (of the op-unit) is possible. (iii) Especially in training scenarios, some movement pattern can be repeated so that the industrial machine performs movements accordingly (train to perform) or avoid them (train to avoid, filter out). (iv) Moving the hand and moving the op-unit can be scaled in time. The operator may be slow, but the machine can speed up. (v) The computer can translate non-straight movement (of the human operator's hand, such as from ALPHA to BETA) to a point-to-point movement of the robot (such as from A to B on the shortest way, or on the fastest way).

In case that industrial machine 100 (cf. FIG. 1) is implemented as an industrial robot, the skilled person will use so-called robot controllers. Such controllers receive high-level instructions (for example, an instruction to move op-unit 120 from location (XA, YA, ZA) to location (XB, YB, ZB)) and convert them to low-level instructions (for example, to let individual joints of arms in unit 110 move accordingly). Such controllers are well-known in the art.

It should be noted that an industrial machine with multiple op-units can also be controlled according to the principles that have been described herein.

### Generic computer system

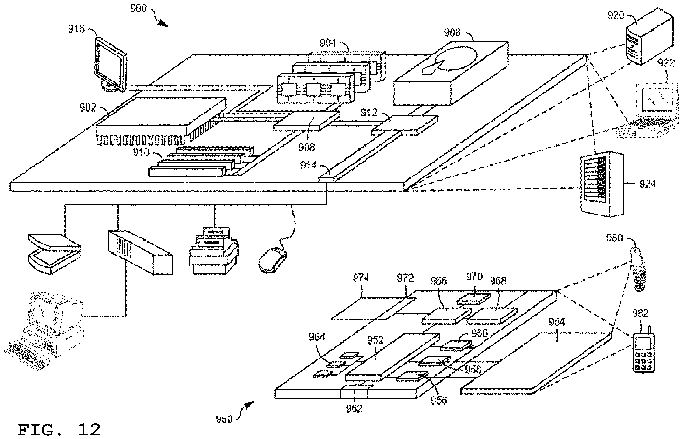

FIG. 12 illustrates an example of a generic computer device 900 and a generic mobile computer device 950, which may be used with the techniques described here. Computing device 900 is intended to represent various forms of digital computers, such as laptops, desktops, workstations, personal digital assistants, servers, blade servers, mainframes, and other appropriate computers. Computing device 950 is intended to represent various forms of mobile devices, such as personal digital assistants, cellular telephones, smart phones, and other similar computing devices. The components shown here, their connections and relationships, and their functions, are meant to be exemplary only, and are not meant to limit implementations of the inventions described and/or claimed in this document.

Computing device 900 includes a processor 902, memory 904, a storage device 906, a high-speed interface 908 connecting to memory 904 and high-speed expansion ports 910, and a low speed interface 912 connecting to low speed bus 914 and storage device 906. Each of the components 902, 904, 906, 908, 910, and 912, are interconnected using various busses, and may be mounted on a common motherboard or in other manners as appropriate. The processor 902 can process instructions for execution within the computing device 900, including instructions stored in the memory 904 or on the storage device 906 to display graphical information for a GUI on an external input/output device, such as display 916 coupled to high speed interface 908. In other implementations, multiple processors and/or multiple buses may be used, as appropriate, along with multiple memories and types of memory. Also, multiple computing devices 900 may be connected, with each device providing portions of the necessary operations (e.g., as a server bank, a group of blade servers, or a multi-processor system).

The memory 904 stores information within the computing device 900. In one implementation, the memory 904 is a volatile memory unit or units. In another implementation, the memory 904 is a non-volatile memory unit or units. The memory 904 may also be another form of computer-readable medium, such as a magnetic or optical disk.

The storage device 906 is capable of providing mass storage for the computing device 900. In one implementation, the storage device 906 may be or contain a computer-readable medium, such as a floppy disk device, a hard disk device, an optical disk device, or a tape device, a flash memory or other similar solid state memory device, or an array of devices, including devices in a storage area network or other configurations. A computer program product can be tangibly embodied in an information carrier. The computer program product may also contain instructions that, when executed, perform one or more methods, such as those described above. The information carrier is a computer- or machine-readable medium, such as the memory 904, the storage device 906, or memory on processor 902.

The high speed controller 908 manages bandwidth-intensive operations for the computing device 900, while the low speed controller 912 manages lower bandwidth-intensive operations. Such allocation of functions is exemplary only. In one implementation, the high-speed controller 908 is coupled to memory 904, display 916 (e.g., through a graphics processor or accelerator), and to high-speed expansion ports 910, which may accept various expansion cards (not shown). In the implementation, low-speed controller 912 is coupled to storage device 906 and low-speed expansion port 914. The low-speed expansion port, which may include various communication ports (e.g., USB, Bluetooth, Ethernet, wireless Ethernet) may be coupled to one or more input/output devices, such as a keyboard, a pointing device, a scanner, or a networking device such as a switch or router, e.g., through a network adapter.

The computing device 900 may be implemented in a number of different forms, as shown in the figure. For example, it may be implemented as a standard server 920, or multiple times in a group of such servers. It may also be implemented as part of a rack server system 924. In addition, it may be implemented in a personal computer such as a laptop computer 922. Alternatively, components from computing device 900 may be combined with other components in a mobile device (not shown), such as device 950. Each of such devices may contain one or more of computing device 900, 950, and an entire system may be made up of multiple computing devices 900, 950 communicating with each other.

Computing device 950 includes a processor 952, memory 964, an input/output device such as a display 954, a communication interface 966, and a transceiver 968, among other components. The device 950 may also be provided with a storage device, such as a microdrive or other device, to provide additional storage. Each of the components 950, 952, 964, 954, 966, and 968, are interconnected using various buses, and several of the components may be mounted on a common motherboard or in other manners as appropriate.

The processor 952 can execute instructions within the computing device 950, including instructions stored in the memory 964. The processor may be implemented as a chipset of chips that include separate and multiple analog and digital processors. The processor may provide, for example, for coordination of the other components of the device 950, such as control of user interfaces, applications run by device 950, and wireless communication by device 950.

Processor 952 may communicate with a user through control interface 958 and display interface 956 coupled to a display 954. The display 954 may be, for example, a TFT LCD (Thin-Film-Transistor Liquid Crystal Display) or an OLED (Organic Light Emitting Diode) display, or other appropriate display technology. The display interface 956 may comprise appropriate circuitry for driving the display 954 to present graphical and other information to a user. The control interface 958 may receive commands from a user and convert them for submission to the processor 952. In addition, an external interface 962 may be provide in communication with processor 952, so as to enable near area communication of device 950 with other devices. External interface 962 may provide, for example, for wired communication in some implementations, or for wireless communication in other implementations, and multiple interfaces may also be used.

The memory 964 stores information within the computing device 950. The memory 964 can be implemented as one or more of a computer-readable medium or media, a volatile memory unit or units, or a non-volatile memory unit or units. Expansion memory 984 may also be provided and connected to device 950 through expansion interface 982, which may include, for example, a SIMM (Single In Line Memory Module) card interface. Such expansion memory 984 may provide extra storage space for device 950, or may also store applications or other information for device 950. Specifically, expansion memory 984 may include instructions to carry out or supplement the processes described above, and may include secure information also. Thus, for example, expansion memory 984 may act as a security module for device 950, and may be programmed with instructions that permit secure use of device 950. In addition, secure applications may be provided via the SIMM cards, along with additional information, such as placing the identifying information on the SIMM card in a non-hackable manner.

The memory may include, for example, flash memory and/or NVRAM memory, as discussed below. In one implementation, a computer program product is tangibly embodied in an information carrier. The computer program product contains instructions that, when executed, perform one or more methods, such as those described above. The information carrier is a computer- or machine-readable medium, such as the memory 964, expansion memory 984, or memory on processor 952, that may be received, for example, over transceiver 968 or external interface 962.

Device 950 may communicate wirelessly through communication interface 966, which may include digital signal processing circuitry where necessary. Communication interface 966 may provide for communications under various modes or protocols, such as GSM voice calls, SMS, EMS, or MMS messaging, CDMA, TDMA, PDC, WCDMA, CDMA2000, or GPRS, among others. Such communication may occur, for example, through radio-frequency transceiver 968. In addition, short-range communication may occur, such as using a Bluetooth, WiFi, or other such transceiver (not shown). In addition, GPS (Global Positioning System) receiver module 980 may provide additional navigation- and location-related wireless data to device 950, which may be used as appropriate by applications running on device 950.

Device 950 may also communicate audibly using audio codec 960, which may receive spoken information from a user and convert it to usable digital information. Audio codec 960 may likewise generate audible sound for a user, such as through a speaker, e.g., in a handset of device 950. Such sound may include sound from voice telephone calls, may include recorded sound (e.g., voice messages, music files, etc.) and may also include sound generated by applications operating on device 950.

The computing device 950 may be implemented in a number of different forms, as shown in the figure. For example, it may be implemented as a cellular telephone 980. It may also be implemented as part of a smart phone 982, personal digital assistant, or other similar mobile device.

Various implementations of the systems and techniques described here can be realized in digital electronic circuitry, integrated circuitry, specially designed ASICs (application specific integrated circuits), computer hardware, firmware, software, and/or combinations thereof. These various implementations can include implementation in one or more computer programs that are executable and/or interpretable on a programmable system including at least one programmable processor, which may be special or general purpose, coupled to receive data and instructions from, and to transmit data and instructions to, a storage system, at least one input device, and at least one output device.

These computer programs (also known as programs, software, software applications or code) include machine instructions for a programmable processor, and can be implemented in a high-level procedural and/or object-oriented programming language, and/or in assembly/machine language. As used herein, the terms "machine-readable medium" and "computer-readable medium" refer to any computer program product, apparatus and/or device (e.g., magnetic discs, optical disks, memory, Programmable Logic Devices (PLDs)) used to provide machine instructions and/or data to a programmable processor, including a machine-readable medium that receives machine instructions as a machine-readable signal. The term "machine-readable signal" refers to any signal used to provide machine instructions and/or data to a programmable processor.

To provide for interaction with a user, the systems and techniques described here can be implemented on a computer having a display device (e.g., a CRT (cathode ray tube) or LCD (liquid crystal display) monitor) for displaying information to the user and a keyboard and a pointing device (e.g., a mouse or a trackball) by which the user can provide input to the computer. Other kinds of devices can be used to provide for interaction with a user as well; for example, feedback provided to the user can be any form of sensory feedback (e.g., visual feedback, auditory feedback, or tactile feedback); and input from the user can be received in any form, including acoustic, speech, or tactile input.

The systems and techniques described here can be implemented in a computing device that includes a back end component (e.g., as a data server), or that includes a middleware component (e.g., an application server), or that includes a front end component (e.g., a client computer having a graphical user interface or a Web browser through which a user can interact with an implementation of the systems and techniques described here), or any combination of such back end, middleware, or front end components. The components of the system can be interconnected by any form or medium of digital data communication (e.g., a communication network). Examples of communication networks include a local area network ("LAN"), a wide area network ("WAN"), and the Internet.

The computing device can include clients and servers. A client and server are generally remote from each other and typically interact through a communication network. The relationship of client and server arises by virtue of computer programs running on the respective computers and having a client-server relationship to each other.

A number of embodiments have been described. Nevertheless, it will be understood that various modifications may be made without departing from the spirit and scope of the invention.

In addition, the logic flows depicted in the figures do not require the particular order shown, or sequential order, to achieve desirable results. In addition, other steps may be provided, or steps may be eliminated, from the described flows, and other components may be added to, or removed from, the described systems. Accordingly, other embodiments are within the scope of the following claims.

### References

- 100: industrial machine
- 110: arm
- 120: op-unit
- 180: obstacle
- 200: computer system
- 220: position monitor module
- 221: position data
- 225: image capturing device, camera
- 226: computer function with vision-based skeletal model tracking algorithm
- 230: modality monitor module
- 231: modality data
- 232: modality attribute
- 235: modality converter (implementation example)
- 240: processing module
- 250: control signal
- 270: orientation monitor module
- 299: radio/wire interface
- 300: human operator
- 301: head
- 310: arm
- 320: hand
- 331: thumb (finger)
- 332: index finger
- 400: sensor arrangement
- 405: glove
- 430: wires
- 431: first fingertip sensor
- 432: second fingertip sensor
- 435: modality converter (implementation example)
- 470: orientation sensor
- 475: conductors
- 480: electronic unit
- 485: power switch
- 486: display
- 500: method
- 510 ... 550: method steps
- A, B, G: locations (of the op-unit)
- ALPHA: positions of the hand (also BETA, GAMMA)
- X, Y, Z: location coordinates
- x, y, z: position coordinates
- t1, t2: time points (position data availability)
- q1, q2, ...: orientation coordinates
- r, p, y: orientation coordinates
- ΔM: time interval, repetition interval (modality)
- ΔP: time interval, repetition interval (position)
- ΔX: re-location of the op-unit
- ΔY: re-location of the op-unit
- K: factor between different repetition intervals
- n, m: fingers

## Claims

1. Computer system (200) for obtaining control signals (250) to control the operation of an industrial machine (100) that has an operative unit (120), the computer system (200) monitoring movement of a human operator (300), the computer system (200) comprising:
a position monitor module (220) that is adapted to monitor the human operator (300) and thereby to determine position data (x, y, z) for at least one hand (320) of the human operator (300) at a first repetition interval (ΔP);
a modality monitor module (230) that is adapted to receive a modality attribute (232, CLOSED/OPEN) of the hand (320) of the human operator (300) at a second repetition interval (ΔM) that is shorter than the first repetition interval (ΔP) by a pre-defined factor (K), wherein the modality monitor module (230) is adapted to receive the modality attribute (232) from a modality converter (235/435) that processes modality data (231) indicating for a pair of particular fingers (331, 332) of the hand (320) if these fingers are touching each other or not touching;
a processing module (240) that is adapted to receive position data (221, (x, y, z)) from the position monitor module (220) and to receive the modality attribute (232) from the modality monitor module (230), the processing module (240) being further adapted to provide a control signal (250) to the industrial machine (100), wherein the control signal that causes the industrial machine (100) to move or to stop the operative unit (120) depending on the modality attribute (232).

2. The system (200) according to claim 1, wherein the position monitor module (220) is associated with an image capturing device (225), and wherein the position monitor module (220) is adapted to obtain the position data (X, Y, Z) by image processing.

3. The system (200) according to claim 2, wherein the image capturing device (225) is implemented by an RGB-camera.

4. The system (200) according to claim 3, wherein the RGB-camera further comprises a depth sensor.

5. The system (200) according to claim 2, wherein the position monitor module (220) is implemented by a computer function (226) that uses a vision-based skeletal model tracking algorithm.

6. The system (200) according to any of the preceding claims, wherein the modality monitor module (230) receives the modality attribute (232) from the modality converter (235/435) that provides the modality attribute (232) with a first modality value (CLOSED) when the modality data (231) indicates that for the pair of the particular fingers (331, 332), the fingers are touching each other, and provides the modality attribute (232) with a second modality value (OPEN) when the particular fingers are not touch each other.

7. The system (200) according to claim 6, wherein the particular fingers (331, 332) are the thumb (331) and the index finger (332), or are the thumb (331) and the middle finger.

8. The system (200) according to any of the preceding claims, wherein the modality monitor (230) is communicatively coupled to a sensor arrangement (400) that is attached to the hand (320) of the operator (300) and wherein the modality monitor (230) receives signals from the sensor arrangement (400) at the second repetition interval (ΔM), wherein the signals either communicate modality data (231) or the modality attribute (232).

9. The system (200) according to any of the preceding claims, further comprising an orientation monitor module (270) that is adapted to monitor the orientation of the hand (320) and to derive roll, pitch and yaw data further used to obtain the control signal (250).

10. Sensor arrangement (400) that is adapted for attachment to the hand (320) of a human operator (300) of an industrial machine, for communicating modality data (231) to a computer system (200) that controls the operation of an industrial machine (100) by monitoring movement of the human operator (300), the modality data (231) indicating for a pair of particular fingers (331, 332) of the hand (320) if the fingers are touching each other or not touching each other.

11. Sensor arrangement (400) according to claim 10, comprising fingertip sensors (431, 432), selected from the following:
conductive material being attached to the particular fingers (331, 332) to establish an electrical connection when the two particular fingers touch each other;
an induction sensor with a coil at one particular finger and a core at the other particular finger, wherein an inductivity is above a pre-defined threshold when the two particular fingers touch each other; and
a combination of a hall sensor and a magnet.

12. Sensor arrangement (400) according to claims 10 or 11, further comprising an orientation sensor (470) to provide orientation data (271) of the hand (320).

13. Sensor arrangement (400) according to any of claims 10-12, being implemented by a glove-like apparel.

14. Computer-implemented method (500) to operate an industrial machine (100), comprising:
in a first loop (501) that is periodically executed at a first repetition interval (ΔP):
monitoring (510) a human operator (300) to determine the position data (x, y, z) for at least one hand (320) of the human operator (300), processing (520) the position data (x, y, z) to identify a location (X, Y, Z) for an operative unit (120) of the industrial machine (100), and instructing (530) the industrial machine (100) to move the operative unit (120) to the identified location (X, Y, Z),
the method (500) being **characterized by** also performing:
in a second loop (502) that is periodically executed at a second repetition interval (ΔM) that is shorter than the first repetition interval (ΔP): determining (540) a hand modality attribute (232), wherein the modality attribute (232) represents a pre-defined pair of particular fingers (331, 332) of the hand (320) touching each other or not, and upon determining a particular modality attribute (232 OPEN), instructing (550) the industrial machine (100) to stop the operative unit (120) moving.

15. Computer program product that - when loaded into a memory of a computer and being executed by at least one processor of the computer causes the computer to perform the steps of the method according to claim 14.
